(19) **Europäisches Patentamt / European Patent Office / Office européen des brevets**

(11) **EP 3 654 720 B1**

(12) **FASCICULE DE BREVET EUROPEEN**

(45) Date de publication et mention de la délivrance du brevet:
**13.04.2022 Bulletin 2022/15**

(21) Numéro de dépôt: **19208766.6**

(22) Date de dépôt: **13.11.2019**

(51) Classification Internationale des Brevets (IPC):
***H04W 72/08*** *(2009.01)*     ***H04W 84/04*** *(2009.01)*

(52) Classification Coopérative des Brevets (CPC):
**H04W 72/085;** H04W 16/14

(54) **MÉTHODE DE SÉLECTION DYNAMIQUE DE RESSOURCES DE COMMUNICATION DANS UN RÉSEAU CELLULAIRE DE TYPE HÉTÉROGÈNE**

VERFAHREN ZUR DYNAMISCHEN AUSWAHL VON KOMMUNIKATIONSRESSOURCEN IN EINEM HETEROGENEN ZELLULAREN NETZ

METHOD OF DYNAMICALLY SELECTING COMMUNICATION RESOURCES IN A HETEROGENEOUS CELLULAR NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2018 FR 1860560**

(43) Date de publication de la demande:
**20.05.2020 Bulletin 2020/21**

(73) Titulaire: **Commissariat à l'énergie atomique et aux énergies alternatives
75015 Paris (FR)**

(72) Inventeurs:
- **MISCOPEIN, Benoît
  38054 Grenoble Cedex 09 (FR)**
- **DE DOMENICO, Antonio
  38054 Grenoble Cedex 09 (FR)**

(74) Mandataire: **Brevalex
56, Boulevard de l'Embouchure
B.P. 27519
31075 Toulouse Cedex 2 (FR)**

(56) Documents cités:
**EP-A1- 2 833 661     EP-A1- 3 089 516**

- **RASCHELLA ALESSANDRO ET AL: "QoS aware radio access technology selection framework in heterogeneous networks using SDN", JOURNAL OF COMMUNICATIONS AND NETWORKS, NEW YORK, NY, USA,IEEE, US, vol. 19, no. 6, 1 décembre 2017 (2017-12-01), pages 577-586, XP011676421, ISSN: 1229-2370, DOI: 10.1109/JCN.2017.000098 [extrait le 2018-01-31]**

**Description**

**DOMAINE TECHNIQUE**

La présente invention s'applique de manière générale au domaine des systèmes de télécommunication dans des bandes non-licenciées. Elle s'applique plus particulièrement aux systèmes de télécommunication cellulaire de type hétérogène, comprenant des macro-cellules ainsi que des petites cellules utilisant des bandes de fréquence non-licenciées voire faiblement licenciées.

**ÉTAT DE LA TECHNIQUE ANTÉRIEURE**

Les réseaux de télécommunications cellulaires hétérogènes ou HetNets représentent une des solutions les plus prometteuses pour le développement de la prochaine génération de téléphonie mobile (5G). De manière générale, un réseau cellulaire hétérogène est composé de plusieurs niveaux (*tiers*) de cellules : macrocellules (*macrocells*) et petites cellules (*small cells*) telles que femtocellules (*femtocells*) et picocellules (*picocells*). Un réseau cellulaire multitechnologie ou multi-RAT (*multi Radio Access Technology*) est composé de réseaux utilisant différentes technologies d'accès radio, par exemple Wi-Fi et 4G, ces réseaux pouvant utiliser différentes bandes de fréquences. Un exemple se trouve dans EP 3089516.

Une autre caractéristique des réseaux cellulaires 5G sera d'utiliser des ressources spectrales non licenciées (c'est-à-dire partagées) pour faire face à une demande toujours croissante en termes de trafic. Des exemples de telles ressources non licenciées sont, d'une part, la bande U-NII (Unlicensed National Information Infrastructure) appelée « bande à 5 GHz » utilisée par les normes Wi-Fi récentes IEEE 802.11n et IEEE 802.11ac, et, d'autre part, la bande dite TV White Space (TV-WS) entre 490 et 690 MHz (dans ce dernier cas on parle parfois d'un régime faiblement licencié). Les ressources non licenciées seront accédées selon des stratégies de radio opportuniste (encore appelée radio cognitive), autrement dit une communication dans une ressource non licenciée ne sera permise que dans la mesure où celle-ci est disponible et ne perturbe pas la communication des autres systèmes de communication qui l'utilisent.

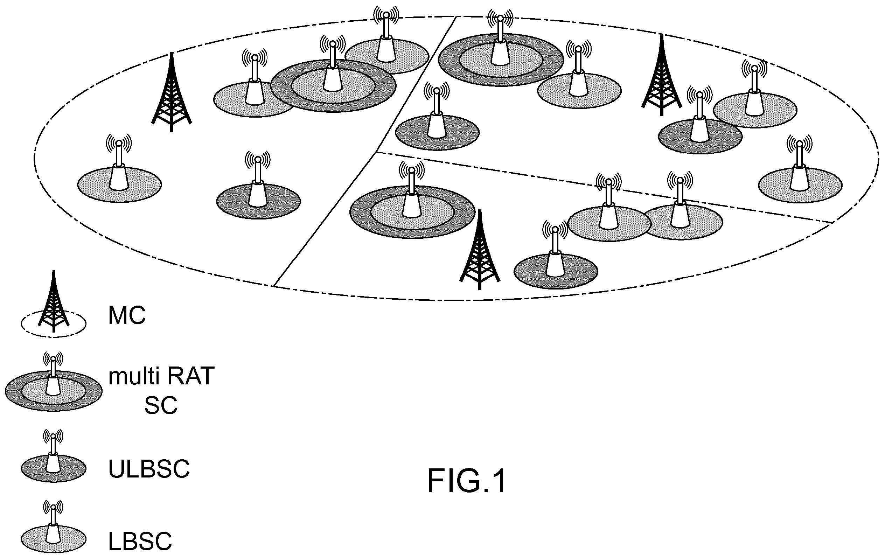

On a représenté schématiquement en Fig. 1 un système de télécommunication cellulaire de type hétérogène. Celui-ci se compose d'une couche de macro-cellules (MC), superposée à une couche de petites cellules (SC). Ces petites cellules peuvent utiliser soit uniquement des ressources licenciées LBSC (*Licensed Band Small Cell*), soit uniquement, de manière opportuniste, des ressources non licenciées (*Unlicensed Band Small Cell*), ULBSC, soit encore une combinaison de ressources licenciées et non licenciées faisant appel à différentes technologies, M-RAT SC (*Multi-RAT Small Cell*).

Dans un tel réseau hétérogène, une petite cellule faisant appel à des ressources non licenciées doit être en mesure d'identifier celle (bande, ou canal correspondant à une fraction de bande) la moins occupée pour l'allouer à une communication avec un terminal mobile situé dans sa zone de couverture. L'occupation des différentes ressources variant dans le temps, celle allocation est généralement dynamique : une ressource allouée à une communication peut devenir plus chargée qu'une autre ressource venant de se libérer. Il est donc nécessaire que la petite cellule avertisse le terminal mobile du choix de la nouvelle ressource allouée.

Dans un système de communication utilisant uniquement des ressources licenciées, l'indication de la ressource allouée au terminal est généralement notifiée au terminal via un canal de contrôle. Cette technique se révèle toutefois mal adaptée à un système de télécommunication utilisant des bandes non licenciées car les fréquents changements d'allocation de ressources nécessiteraient une procédure de notification complexe ou bien l'utilisation de ressources fréquentielles/ temporelles pour un canal de contrôle, ce qui conduirait dans tous les cas à une surcharge importante de trafic au sein du réseau.

La norme ECMA-392 (2nde édition, 2012) propose une solution de notification de changement de canal pour les communications à haut débit dans les bandes TV-WS. Selon cette norme, la couche de contrôle d'accès au canal ou couche MAC (*Medium Access Layer*) utilise des supertrames (*superframes*), chaque supertrame étant composée d'un intervalle de balise (BP), un intervalle de communication de données ou DTP (*Data Transfer Period*) et un intervalle de signalisation par contention ou CSW (*Contention Signalling Window*). L'intervalle de balise peut servir à transmettre des informations de contrôle et notamment un changement éventuel de canal. Dans le cadre réglementaire de l'utilisation des TV-WS, les stations de base doivent périodiquement demander des licences temporaires pour émettre dans un canal du spectre TV. Dans le cas où un canal devient indisponible, une station de base se voit attribuer une nouvelle licence temporaire pour un autre canal et doit notifier ce changement de canal aux terminaux mobiles qu'elle sert. Un champ spécifique de l'intervalle de balise indique alors aux terminaux mobiles quel sera le nouveau canal dans lequel la station de base opérera et quand le basculement de canal interviendra.

La solution préconisée dans la norme ECMA-392 ne peut être transposée simplement à un réseau cellulaire hétérogène dont les petites cellules utilisent des bandes de fréquence non licenciées. En effet, si une telle petite cellule opère dans un canal déjà occupé par un autre système, celle-ci doit changer de canal et en avertir les terminaux mobiles qu'elle sert. Or, si la notification de changement de canal est prévue au moyen (du champ balise) d'une supertrame transmise sur ce canal, cette dernière peut ne pas être reçue par les terminaux mobiles en raison de l'occupation du canal par une source d'interférence. Il en résulte que les terminaux mobiles se désynchronisent de la station de base de la petite cellule au bout d'un certain temps et se lancent dans une procédure de recherche de balises sur tous les canaux possibles. Les communications entre la station de base de la petite cellule et les terminaux mobiles sont alors interrompues, ce qui nuit sensiblement à la qualité de service (QoS). D'autre part, les scans intempestifs et répétés de balises par les terminaux mobiles réduisent l'autonomie des batteries des terminaux mobiles.

Le but de la présente invention est par conséquent de proposer une méthode de sélection dynamique de ressources de transmission non-licenciées dans un réseau de télécommunication, notamment dans un réseau cellulaire de type hétérogène, qui ne présente pas les inconvénients précités, à savoir qui ne nécessite pas de procédure de notification complexe ou de surcharge de trafic, et ne conduise pas à des interruptions intempestives des communications entre stations de base et terminaux mobiles.

**EXPOSÉ DE L'INVENTION**

La présente invention est définie par un système de sélection dynamique de ressources de transmission entre une station de base, en particulier une station de base d'une petite cellule d'un réseau cellulaire hétérogène, et un terminal mobile, la station de base pouvant établir une liaison avec le terminal mobile en accédant aux dites ressources de transmission de manière opportuniste, dans laquelle :

   la station de base et le terminal possèdent chacun au moins un premier compteur associé à chacune des ressources de transmission, l'état de ce premier compteur étant caractéristique de la disponibilité de la ressource de transmission à laquelle il est associé, la station de base et le terminal mobile calculant pour chacune des ressources de transmission, un indice de qualité de transmission à partir de l'état du premier compteur et sélectionnant la ressource de transmission d'indice le plus élevé ;
   la station de base déterminant si la ressource de transmission sélectionnée est disponible et, dans l'affirmative, incrémentant son premier compteur puis transmettant l'état de celui-ci au terminal mobile au moyen d'un signal de balise d'une supertrame sur la ressource de transmission sélectionnée et, dans la négative, n'incrémentant pas son premier compteur et ne transmettant pas de données sur ladite liaison;
   le terminal mobile déterminant si un signal de balise est présent sur la ressource de transmission sélectionnée et incrémentant son premier compteur, dans l'affirmative et, dans la négative, n'incrémentant pas son premier compteur et ne recevant pas de données sur ladite liaison ;
   de sorte que la station de base et le terminal mobile sélectionnent la même ressource de transmission ($SC\text{-}Ch(t)$) pour supporter la liaison.

Avantageusement, le premier compteur de la station de base est incrémenté si le niveau de signal sur la ressource de transmission à laquelle il est associé est inférieur à un seuil prédéterminé et n'est pas incrémenté sinon.

Selon un premier exemple de réalisation, l'indice de qualité d'une ressource de transmission est estimé au niveau de la station de base (resp. du terminal mobile) comme l'état du premier compteur de la station de base (resp. du terminal mobile) associé à ladite ressource.

Selon un second exemple de réalisation, l'indice de qualité d'une ressource de transmission est estimé au niveau de la station de base (resp. du terminal mobile) à partir d'une fonction de prédiction ($F$) ayant comme variable prédictive l'état du premier compteur de la station de base (resp. du terminal mobile) associé à ladite ressource, ladite fonction de prédiction étant identique pour la station de base et le terminal mobile.

La station de base et le terminal possèdent de préférence chacun au moins un second compteur associé à chacune des ressources de transmission, l'indice de qualité de transmission d'une ressource de transmission étant estimé au niveau de la station de base (resp. du terminal mobile) à partir d'une fonction de prédiction ayant comme variables prédictives les états respectifs des premier et second compteurs de la station de base (resp. du terminal mobile).

Dans ce cas, lorsque la station de base détermine que la ressource de transmission sélectionnée n'est pas disponible, elle incrémente son second compteur associé à cette ressource, et, lorsque le terminal mobile détermine que le signal de balise n'est pas présent sur la ressource de transmission sélectionnée, il incrémente son second compteur associé à cette ressource.

L'indice de qualité d'une ressource de transmission peut être calculé par la station de base (resp. par le terminal mobile) comme $\dfrac{C_1}{C_1 + C_2}$ où $C_1$ est l'état du premier compteur de la station de base (resp. du terminal mobile) et $C_2$ est l'état du second compteur de la station de base (resp. du terminal mobile).

Alternativement, l'indice de qualité d'une ressource de transmission peut être calculé par la station de base (resp. par le terminal mobile) comme $\dfrac{C_1}{C_1+C_2}+\alpha\sqrt{\dfrac{\log t}{C_1+C_2}}$ où $C_1$ est l'état du premier compteur de la station de base (resp. du terminal mobile) et $C_2$ est l'état du second compteur de la station de base (resp. du terminal mobile), $\alpha$ est un paramètre positif et $t$ est un indice temporel incrémenté à chaque supertrame.

Avantageusement, lorsque la station de base (resp. le terminal mobile) détermine que le taux d'erreur sur la ressource de transmission sélectionnée est supérieur à une valeur de seuil prédéterminée, elle incrémente son second compteur associé à cette ressource.

L'indice de qualité d'une ressource de transmission peut alors être calculé par la station de base (resp. par le

terminal mobile) comme $\dfrac{C_1}{C_1+C'_2}$ où $C_1$ est l'état du premier compteur de la station de base (resp. du terminal mobile) et $C'_2$ est l'état du second compteur de la station de base (resp. du terminal mobile).

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1 représente de manière schématique un système de télécommunication cellulaire de type hétérogène;
La Fig. 2A représente une première séquence d'étapes, exécutée par une station de base, mettant en oeuvre une méthode de sélection dynamique de ressources de transmission selon un premier mode de réalisation de l'invention ;
La Fig. 2B représente une seconde séquence d'étapes, exécutée par un terminal mobile, mettant en oeuvre une méthode de sélection dynamique de ressources de transmission selon un premier mode de réalisation de l'invention ;
La Fig. 3A représente une première séquence d'étapes, exécutée par une station de base, mettant en oeuvre une méthode de sélection dynamique de ressources de transmission selon un second mode de réalisation de l'invention ;
La Fig. 3B représente une seconde séquence d'étapes, exécutée par un terminal mobile, mettant en oeuvre une méthode de sélection dynamique de ressources de transmission selon un second mode de réalisation de l'invention.

## EXPOSÉ DÉTAILLÉ DE MODES DE RÉALISATION PARTICULIERS

Nous considérerons dans la suite un réseau utilisant des ressources de transmission non-licenciées voire faiblement licenciées. Sans perte de généralité nous supposerons que ce réseau est un réseau cellulaire comportant une couche de macro-cellules utilisant des ressources spectrales licenciées et une couche de petites cellules (SCs) utilisant des ressources spectrales non-licenciées ou faiblement licenciées.

Par ressources de transmission non-licenciées (ou libres), on entend des ressources de transmission (bandes de fréquence ou canaux) partagées avec un autre système radio, (par exemple réseau de télécommunication déployé dans la même zone). Par ressources de transmission faiblement licenciées, on entend que tout ou partie des ressources de transmission est partagée avec un système primaire (diffusion TV, radar), à qui ces ressources sont déjà attribuées et qui sont accès prioritaire à la ressource. Dans la suite, nous conviendrons que le terme « ressource de transmission non licenciée » recouvre ces deux cas de figure.

Une petite cellule peut transmettre de manière opportuniste au moyen d'une ressource de transmission ponctuellement ou temporairement inoccupée par un autre système radio (primaire ou non). Avant de pouvoir émettre sur une telle ressource, la petite cellule doit déterminer si elle est déjà occupée par un deuxième système radio ou déjà utilisée par une autre communication opportuniste (entre la station de base d'une mini cellule voisine et un terminal mobile par exemple).

L'idée à la base de la présente invention est de prévoir un mécanisme de sélection dynamique de ressource de transmission, exécuté en parallèle et de manière indépendante par un terminal mobile et par la station de base de la petite cellule qui la sert. Ce mécanisme utilise un ou plusieurs compteurs du côté de la station de base ainsi qu'un ou plusieurs compteurs correspondants du côté du terminal mobile. L'état de ce ou ces compteur(s) permet à la station de base et au terminal mobile d'évaluer indépendamment et de la même manière la qualité des différentes ressources de transmission et de déterminer celle d'entre elles qui offrira le meilleur support à la liaison entre la station de base et le terminal mobile.

On considère dans la suite une communication entre un terminal mobile et la station de base d'une mini-cellule au sein d'un réseau de type hétérogène.

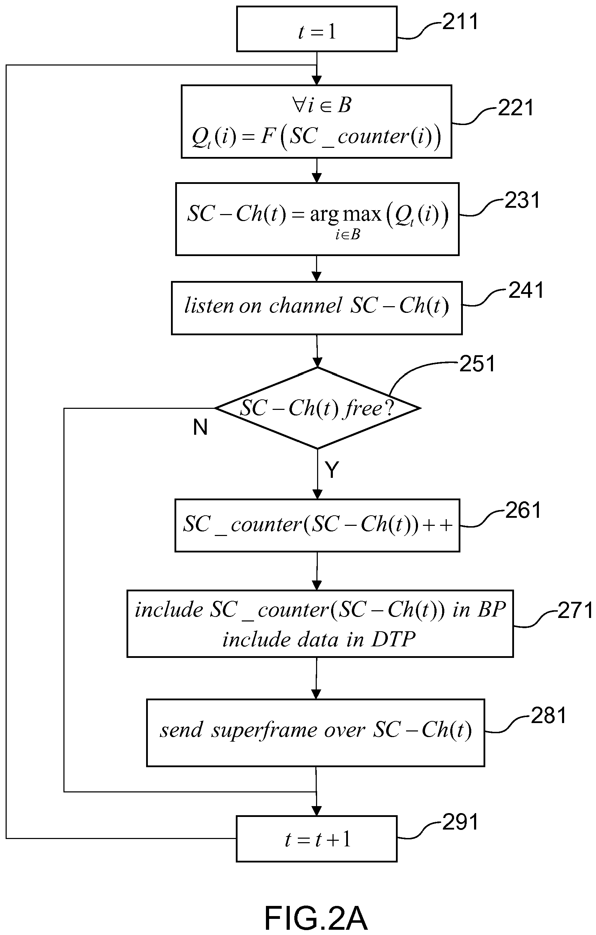

La Fig. 2A représente sous forme d'ordinogramme une première séquence d'étapes d'une méthode de sélection dynamique de ressources de transmission non licenciées, selon un premier mode de réalisation de l'invention. Cette première séquence d'étapes est exécutée par la station de base BS de la mini-cellule SC.

A l'étape 211, l'indice temporel $t$ est initialisé, ici à la valeur 1. Cet indice peut être par exemple incrémenté à la fréquence de répétition des supertrames comme nous le verrons plus loin. L'initialisation peut être programmée lorsque qu'une communication doit être établie ou lors d'une procédure de hand over.

Les ressources de transmission non-licenciées dont peut disposer de manière opportuniste la mini-cellule SC sont indexées ici par $i \in B$, où $B$ désigne l'ensemble de ces ressources. Les ressources de transmission peuvent être par exemple des bandes spectrales, des sous-bandes ou des canaux de transmission au sein d'une bande spectrale, des groupes de sous-porteuses dans un multiplex OFDM. On suppose qu'un compteur, $SC\_counter(i)$, est associé à chacune de ces ressources.

A l'étape 221, la station de base BS de la mini-cellule calcule, pour chacune des ressources $i \in B$, un indice de qualité de transmission, noté $Q_t(i)$, à partir de l'état courant du compteur, $SC\_counter(i)$, associé à cette ressource, soit :

$$Q_t(i) = F\left(SC\_counter(i)\right) \tag{1}$$

où F est une fonction qui sera explicitée plus loin.

A l'étape 231, la station de base BS détermine la ressource de transmission, notée $SC\text{-}Ch(t)$, qui présente l'indice de qualité le plus élevé, soit :

$$SC - Ch(t) = \arg\max_{i \in B}\left(Q_t(i)\right) \tag{2}$$

On comprendra que cette sélection est dynamique dans la mesure où les indices de qualité respectifs des différentes ressources de transmission évoluent dans le temps.

La station de base sélectionne la ressource $SC\text{-}Ch(t)$ et détermine en 241 si celle-ci est disponible en détectant si une transmission y est déjà présente. Autrement dit, le récepteur effectue une écoute (*sensing*) sur la ressource en question et détermine, par exemple, si le niveau du signal reçu est supérieur à un seuil prédéterminé. D'autres techniques de détection spectrale peuvent être alternativement utilisées comme décrit dans l'article de A. De Domenico et al. intitulé « A Survey on MAC Stratégies for Cognitive Radio Networks," in IEEE Communications Surveys & Tutorials, vol. 14, no. 1, pp. 21-44, 2012.

Dans le cas où la ressource de transmission est déjà occupée (signal présent), le processus se termine en 291. Autrement dit, la station de base de la mini-cellule SC ne transmet pas de données au terminal mobile au moyen de la ressource sélectionnée et les indices de qualité des différentes ressources de transmission ne sont pas évalués avant la supertrame suivante.

En revanche, si la ressource $SC\text{-}Ch(t)$ est libre, la station de base incrémente le compteur relatif à cette ressource, $SC\_counter(SC - Ch(t))$, en 261. Elle inclut ensuite en 271 l'état de ce compteur dans le champ balise, BP, et les données à destination du terminal mobile dans le champ DTP de la supertrame. Cette dernière est émise sur la ressource $SC\text{-}Ch(t)$ en 281.

L'indice temporel est enfin incrémenté en 291 et le processus de sélection dynamique de ressource de transmission se répète à la supertrame suivante.

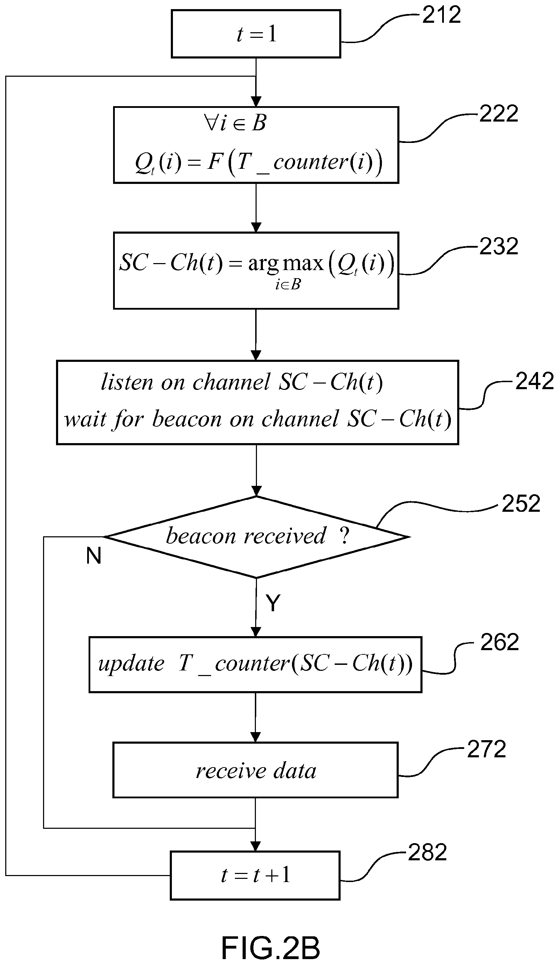

La Fig. 2B représente sous forme d'ordinogramme une seconde séquence d'étapes d'une méthode de sélection dynamique de ressources de transmission non licenciées, selon un premier mode de réalisation de l'invention. Cette seconde séquence d'étapes est exécutée par le terminal mobile en parallèle à celle exécutée par la station de base en Fig. 2A.

Les étapes 212 à 232 sont identiques aux étapes 211 à 231 déjà décrites. Plus précisément, un indice temporel est initialisé en 212 à l'établissement de la communication. Cet indice est incrémenté en 282 à la même fréquence que celle incrémentant l'indice $t$ en 281, par exemple à la fréquence de récurrence des supertrames. Un compteur $T\_counter(i)$ est associé à chacune des ressources de transmission $i \in B$.

A l'étape 222, le terminal mobile calcule, pour chacune des ressources $i \in B$, l'indice de qualité de transmission, noté $Q_t(i)$, à partir de l'état courant du compteur, $T\_counter(i)$, associé à cette ressource, soit :

$$Q_t(i) = F\left(T\_counter(i)\right) \tag{3}$$

où la fonction F est identique à celle utilisée du côté de la station de base. Nous verrons plus loin que l'état du compteur $T\_counter(i)$ est identique à celui du compteur $SC\_counter(i)$ et que par conséquent les indices de qualité $Q_t(i)$ des différentes ressources de transmission sont les mêmes que ceux calculés par la station de base. Ceci justifie l'utilisation de la même notation pour les désigner.

A l'étape 232, le terminal mobile détermine la ressource de transmission, notée, $SC-Ch(t)$, qui présente l'indice de qualité le plus élevé, comme dans l'expression (2).

Le récepteur du terminal mobile sélectionne la ressource $SC-Ch(t)$ et attend sur ce canal la réception du signal de balise en 242.

Si aucun signal de balise et, par conséquent, aucune supertrame à destination du terminal mobile, n'est reçu, le terminal mobile passe à l'étape 282. Plus précisément, l'absence du signal de balise par exemple sera constatée au bout d'une durée *timeout*. Dans ce cas, le terminal mobile attend la supertrame suivante, pour laquelle pour évaluer à nouveau les indices de qualité des différentes ressources de transmission.

En revanche, si le signal de balise est détecté, le compteur $T\_counter(SC - Ch(t))$, associé à la ressource de transmission sélectionnée, est mis à jour avec l'état du compteur transmis par la station de base dans le champ BS de la supertrame. Alternativement, il peut être simplement incrémenté. Les données sont récupérées de la partie DTP de la supertrame.

Dans les deux cas, l'indice temporel est incrémenté en 282 et le processus de sélection dynamique de ressource de transmission se répète à la supertrame suivante.

Comme on pourra le constater, de deux choses l'une :

Soit la ressource sélectionnée est occupée et le compteur $SC\_counter(SC-Ch(t))$ n'est pas incrémenté, la supertrame contenant l'état du compteur (et les données éventuelles) n'est pas émise. Par conséquent, le signal de balise n'est pas reçu et le compteur $T\_counter(SC - Ch(t))$ n'est pas incrémenté. A la supertrame suivante, la station de base et le terminal sélectionneront une nouvelle ressource de transmission, $SC - Ch(t+1)$, présentant un meilleur indice de qualité. Ce choix étant basé sur les mêmes états de compteurs et la même fonction $F$, la sélection sera cohérente entre la station de base et le terminal.

Soit la ressource sélectionnée est libre, le compteur $SC\_counter(SC-Ch(t))$ est incrémenté, la supertrame contenant l'état du compteur (et les données éventuelles) est émise par la station de base. Le signal de balise est reçu par le terminal mobile sur le canal sélectionné et le compteur $T\_counter(SC-Ch(t))$ est mis à jour ou, de manière équivalente, incrémenté. Ainsi, les compteurs précités présentent le même état au terme du processus et la sélection dynamique de la ressource de transmission est à nouveau cohérente à la supertrame suivante. Dans tous les cas, la ressource de transmission sélectionnée permet de supporter la liaison entre la station de base et le terminal mobile.

La fonction F peut être simplement l'identité, auquel cas l'indice de qualité n'est autre que l'état des compteurs, $SC\_counter(SC-Ch(t))$, $T\_counter(SC-Ch(t))$. Alternativement, elle peut être un filtrage passe-bas avec un coefficient d'oubli de manière à donner un poids plus important aux mesures récentes qu'aux mesures anciennes. De manière générale, elle peut être une fonction de prédiction estimant l'indice de qualité de la ressource en fonction des mesures passées.

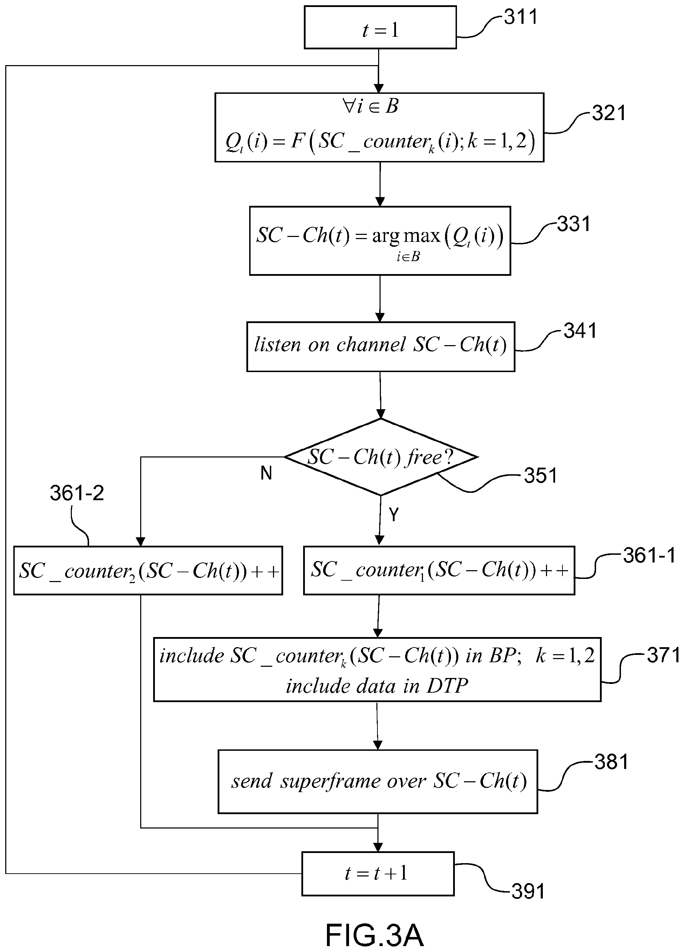

La Fig. 3A représente sous forme d'ordinogramme une première séquence d'étapes d'une méthode de sélection dynamique de ressources de transmission non licenciées, selon un second mode de réalisation de l'invention. Cette première séquence d'étapes est exécutée par la station de base de la mini-cellule.

Ce second mode de réalisation diffère du premier dans la mesure où le calcul de l'indice de qualité fait ici appel à une pluralité K de compteurs par ressource de transmission, ces compteurs étant caractéristiques de l'état de disponibilité de cette ressource.

Comme précédemment, le processus de sélection dynamique de ressource de transmission débute par une initialisation de l'indice temporel en 311. Les compteurs associés aux différentes ressources sont également initialisés à une valeur donnée non nulle.

L'indice de qualité, $Q_t(i)$, de chacune des ressources de transmission, $i \in B$, est ensuite calculé en 321 à partir des états des compteurs associés à cette ressource :

$$Q_t(i) = F\left(SC\_counter_k(i); k = 1,.., K\right) \qquad (4)$$

Sans perte de généralité, on supposera dans la suite que K = 2.

La sélection de la ressource de transmission présentant l'indice de qualité le plus élevé est effectuée en 331. La station de base détermine en 351 si cette ressource est disponible en détectant en 341 si une transmission y est déjà présente, comme dans le premier mode de réalisation.

Si la ressource de transmission est libre, un premier compteur $SC\_counter_1(SC -Ch(t))$ est incrémenté en 361-1. L'état des deux compteurs est ensuite inclus dans la partie balise BP et les données à transmettre dans la partie DTP de la supertrame en 371. Alternativement, l'état du premier compteur et la somme des états des premier et second compteurs sont inclus dans la partie balise BP. Dans les deux cas, la supertrame ainsi constituée est transmise en 381 sur la ressource de transmission sélectionnée.

En revanche, si la ressource de transmission est occupée, un second compteur $BS\_counter_2(SC\text{-}Ch(t))$ est incrémenté en 361-2.

Dans les deux cas, l'indice temporel est incrémenté en 391 et le processus de sélection dynamique se répète à la supertrame suivante.

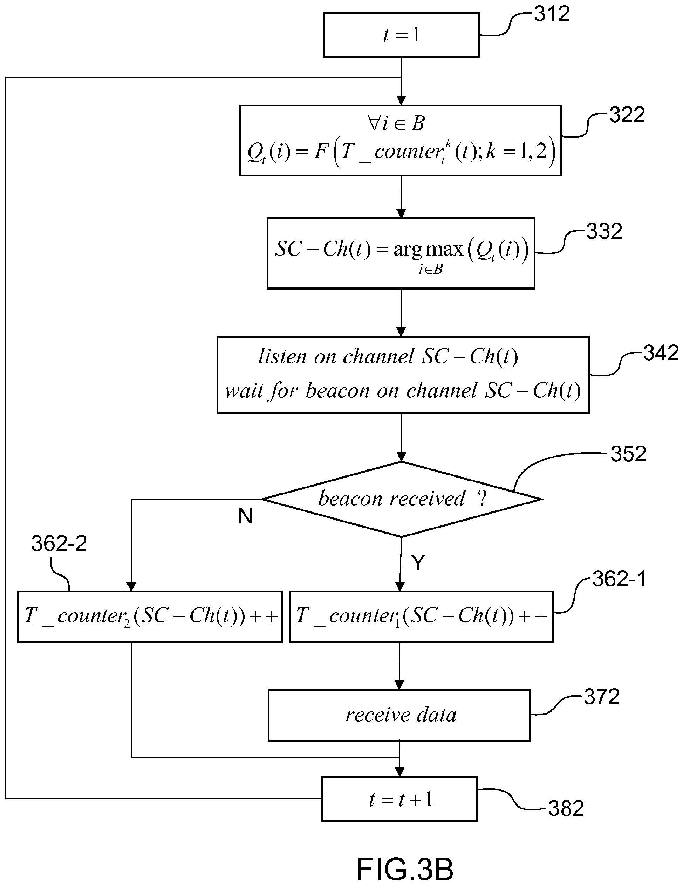

La Fig. 3B représente sous forme d'ordinogramme une seconde séquence d'étapes d'une méthode de sélection dynamique de ressources de transmission non licenciées, selon le second mode de réalisation de l'invention. Cette seconde séquence d'étapes est exécutée par le terminal mobile situé dans la zone de couverture de la mini-cellule.

Là encore, le processus de sélection de ressource de transmission selon le second mode de réalisation diffère du premier en ce qu'une pluralité K de compteurs sont pris en compte afin de calculer l'indice de qualité d'une ressource.

Le processus débute par une initialisation de l'indice temporel en 312. Les compteurs associés aux différentes ressources sont également initialisés à une valeur donnée non nulle, identique à la valeur d'initialisation de la station de base.

L'indice de qualité, $Q_t(i)$, de chacune des ressources de transmission $i \in B$, est ensuite calculé en 322 à partir des états courants des compteurs associés à cette ressource :

$$Q_t(i) = F\left(T\_counter_i^k(t); k = 1, .., K\right) \qquad (5)$$

où la fonction F est identique à celle utilisée du côté de la station de base.

Le récepteur du terminal mobile sélectionne la ressource $SC\text{-}Ch(t)$ et attend sur ce canal la réception du signal de balise en 342.

Si le signal de balise est détecté en 352, le premier compteur $T\_counter_1(SC\text{-}Ch(t))$, associé à la ressource de transmission sélectionnée, est incrémenté en 362-1. Les données sont récupérées de la partie DTP de la supertrame en 372.

En revanche, si aucun signal de balise et, par conséquent, aucune supertrame à destination du terminal mobile n'est reçue sur la ressource sélectionnée, le second compteur $T\_counter_2(SC\text{-}Ch(t))$, associé à la ressource de transmission sélectionnée, est incrémenté en 362-2. L'absence du signal de balise par exemple sera constatée au bout d'une durée *timeout.*

Dans les deux cas, l'indice temporel est incrémenté en 382 et le processus de sélection dynamique de ressource de transmission se répète à la supertrame suivante.

Comme dans le premier mode de réalisation, les états des compteurs associés à une ressource sont identiques pour la station de base et le terminal mobile. Il en résulte une sélection dynamique cohérente de la ressource de transmission entre les deux entités et ce, quel que soit l'indice temporel.

Selon une première variante du second mode de réalisation, la fonction F peut être définie par :

$$F(C_1, C_2) = \frac{C_1}{C_1 + C_2} \qquad (6)$$

où $C_1$ et $C_2$ représentent respectivement l'état du premier compteur et du second compteur (de la station de base/ du terminal mobile). Ainsi, selon cette variante, l'indice de qualité est la fraction du nombre de fois que la ressource sélectionnée a été déterminée comme libre par rapport au nombre de fois où celle-ci a été sélectionnée.

Selon une seconde variante, la fonction F peut être définie par :

$$F(C_1, C_2') = \frac{C_1}{C_1 + C_2'} \qquad (7)$$

où $C_1$ et $C_2'$ représentent respectivement l'état du premier compteur (de la station de base/ du terminal mobile) et l'état d'un second compteur incrémenté soit si la ressource de transmission sélectionnée est occupée (niveau de signal supérieur à une valeur de seuil), soit si le pourcentage de données correctement reçues sur cette ressource est inférieur à un certain seuil. En lieu et place du pourcentage de données correctement reçues, on pourra utiliser l'inverse du taux d'erreur sur la ressource sélectionnée. Il convient de noter toutefois que, dans ce cas, la mesure du taux du pourcentage de données correctes/ du taux d'erreur n'est pas réalisée pendant une opération d'écoute du canal mais après une étape de réception de données extraites d'une supertrame précédente sur la ressource de transmission sélectionnée. Cette information est disponible à la station de base après la réception d'un paquet d'acquittement des informations reçues, envoyé par le terminal.

Selon une troisième variante, on utilise une approche dite UCB dont on trouvera une description dans l'article de P. Auer et al. intitulé « Finite-time analysis of the multiarmed bandit problem », publié dans Machine Learning, vol. 47, pp. 235-256, 2002. Selon cette approche, on calcule pour chaque ressource de transmission la récompense que l'on peut attendre par sa sélection :

$$F(C_1, C_2, t) = \frac{C_1}{C_1 + C_2} + \alpha \sqrt{\frac{\log t}{C_1 + C_2}} \qquad (8)$$

où $C_1$ et $C_2$ représentent respectivement l'état du premier compteur et du second compteur (de la station de base/ du terminal mobile), $t$ étant l'indice temporel, $\alpha$ est un paramètre positif, le terme $\alpha\sqrt{\dfrac{\log t}{C_1 + C_2}}$ étant un biais choisi pour avoir une décroissance logarithmique du regret. Le premier terme de la somme représente la connaissance que le système a de la qualité du canal alors que le deuxième terme porte le système à explorer de nouveaux canaux radio.

De manière plus générale, la fonction F fournissant l'indice de qualité pourra être une fonction de prédiction utilisant comme variables prédictives les compteurs associés à la ressource de transmission, $C_k^i$, $k$ =1,..,$K$, et le cas échéant l'indice temporel t, la fonction de prédiction pouvant être obtenue au moyen d'un apprentissage supervisé ou non-supervisé. Il est également envisageable d'obtenir directement la ressource de transmission *SC-Ch(t)* présentant l'indice de qualité le plus élevé à partir d'une fonction de prédiction étendue, $\overline{F}$, utilisant comme variables prédictives l'ensemble des compteurs associés aux ressources de transmission $C_k^i$ ; $k$ = 1,..,$K$ , ;$i \in B$ ainsi que, le cas échéant l'indice temporel $t$ :

$$SC - Ch(t) = \overline{F}\left(C_k^i; k = 1,..,K; i \in B\right) \qquad (9)$$

la fonction de prédiction étendue pouvant être là encore obtenue au moyen d'un apprentissage supervisé ou non supervisé.

**Revendications**

1. Système de sélection dynamique de ressources de transmission entre une station de base, en particulier une station de base d'une petite cellule d'un réseau cellulaire hétérogène, et un terminal mobile, la station de base pouvant établir une liaison avec le terminal mobile en accédant aux dites ressources de transmission de manière opportuniste, **caractérisé en ce que** :

   la station de base et le terminal possèdent chacun au moins un premier compteur associé à chacune des ressources de transmission, l'état de ce premier compteur étant caractéristique de la disponibilité de la ressource de transmission à laquelle il est associé, la station de base et le terminal mobile calculant (221-222, 321-322) pour chacune des ressources de transmission, un indice de qualité de transmission à partir de l'état du premier compteur et sélectionnant (231-232, 331-332) la ressource de transmission d'indice le plus élevé ;
   la station de base déterminant si la ressource de transmission sélectionnée est disponible (251, 351) et, dans l'affirmative, incrémentant son premier compteur (261, 361-1) puis transmettant l'état de celui-ci (271-281, 371-381) au terminal mobile au moyen d'un signal de balise d'une supertrame sur la ressource de transmission sélectionnée et, dans la négative, n'incrémentant pas son premier compteur et ne transmettant pas de données sur ladite liaison;
   le terminal mobile déterminant si un signal de balise est présent sur la ressource de transmission sélectionnée (252, 352) et incrémentant (262, 362-1) son premier compteur, dans l'affirmative et, dans la négative, n'incrémentant pas son premier compteur et ne recevant pas de données sur ladite liaison ;
   de sorte que la station de base et le terminal mobile sélectionnent la même ressource de transmission (*SC-Ch(t)*) pour supporter la liaison.

**2.** Système de sélection dynamique de ressources de transmission selon la revendication 1, **caractérisé en ce que** le premier compteur de la station de base est incrémenté (261, 361-1) si le niveau de signal sur la ressource de transmission à laquelle il est associé est inférieur à un seuil prédéterminé et n'est pas incrémenté sinon.

**3.** Système de sélection dynamique de ressources de transmission selon la revendication 2, **caractérisé en ce que** l'indice de qualité d'une ressource de transmission est estimé au niveau de la station de base (resp. du terminal mobile) comme l'état du premier compteur de la station de base (resp. du terminal mobile) associé à ladite ressource.

**4.** Système de sélection dynamique de ressources de transmission selon la revendication 2, **caractérisé en ce que** l'indice de qualité d'une ressource de transmission est estimé au niveau de la station de base (resp. du terminal mobile) à partir d'une fonction de prédiction (*F*) ayant comme variable prédictive l'état du premier compteur de la station de base (resp. du terminal mobile) associé à ladite ressource, ladite fonction de prédiction étant identique pour la station de base et le terminal mobile.

**5.** Système de sélection dynamique de ressources de transmission selon la revendication 1, **caractérisé en ce que** la station de base et le terminal possèdent chacun au moins un second compteur associé à chacune des ressources de transmission, l'indice de qualité de transmission d'une ressource de transmission étant estimé au niveau de la station de base (resp. du terminal mobile) à partir d'une fonction de prédiction ayant comme variables prédictives les états respectifs des premier et second compteurs de la station de base (resp. du terminal mobile).

**6.** Système de sélection dynamique de ressources de transmission selon la revendication 5, **caractérisé en ce que**

lorsque la station de base détermine que la ressource de transmission sélectionnée n'est pas disponible, elle incrémente (361-2) son second compteur associé à cette ressource ;
lorsque le terminal mobile détermine que le signal de balise n'est pas présent sur la ressource de transmission sélectionnée (362-2), il incrémente son second compteur associé à cette ressource.

**7.** Système de sélection dynamique de ressources de transmission selon la revendication 6, **caractérisé en ce que** l'indice de qualité d'une ressource de transmission est calculé par la station de base (resp. par le terminal mobile)

comme $\dfrac{C_1}{C_1 + C_2}$ où $C_1$ est l'état du premier compteur de la station de base (resp. du terminal mobile) et $C_2$ est l'état du second compteur de la station de base (resp. du terminal mobile).

**8.** Système de sélection dynamique de ressources de transmission selon la revendication 6, **caractérisé en ce que** l'indice de qualité d'une ressource de transmission est calculé par la station de base (resp. par le terminal mobile)

comme $\dfrac{C_1}{C_1 + C_2} + \alpha \sqrt{\dfrac{\log t}{C_1 + C_2}}$ où $C_1$ est l'état du premier compteur de la station de base (resp. du terminal mobile) et $C_2$ est l'état du second compteur de la station de base (resp. du terminal mobile), $\alpha$ est un paramètre positif et *t* est un indice temporel incrémenté à chaque supertrame.

**9.** Système de sélection dynamique de ressources de transmission selon la revendication 1, **caractérisé en ce que** lorsque la station de base (resp. le terminal mobile) détermine que le taux d'erreur sur la ressource de transmission sélectionnée est supérieur à une valeur de seuil prédéterminée, elle incrémente son second compteur associé à cette ressource.

**10.** Système de sélection dynamique de ressources de transmission selon la revendication 9, **caractérisé en ce que** l'indice de qualité d'une ressource de transmission est calculé par la station de base (resp. par le terminal mobile)

comme $\dfrac{C_1}{C_1 + C'_2}$ où $C_1$ est l'état du premier compteur de la station de base (resp. du terminal mobile) et $C'_2$ est l'état du second compteur de la station de base (resp. du terminal mobile).

**Patentansprüche**

1. System zur dynamischen Auswahl von Übertragungsressourcen zwischen einer Basisstation, insbesondere einer Basisstation einer kleineren Zelle eines heterogenen zellularen Netzwerks, und einem mobilen Endgerät, wobei die Basisstation eine Verbindung mit dem mobilen Endgerät herstellen kann, indem sie opportunistisch auf die genannten Übertragungsressourcen zugreift, **dadurch gekennzeichnet, dass**:

   die Basisstation und das Endgerät jeweils mindestens einen ersten Zähler besitzen, der jeder der Übertragungsressourcen zugeordnet ist, wobei der Stand dieses ersten Zählers für die Verfügbarkeit der Übertragungsressource, der er zugeordnet ist, charakteristisch ist, wobei die Basisstation und das mobile Endgerät für jede der Übertragungsressourcen ausgehend vom Stand des ersten Zählers einen Übertragungsqualitätsindex berechnen (221-222, 321-322) und die Übertragungsressource mit dem höchsten Index auswählen (231-232, 331-332);
   die Basisstation feststellt, ob die ausgewählte Übertragungsressource verfügbar ist (251, 351), und wenn ja, ihren ersten Zähler inkrementiert (261, 361-1) und dann dessen Stand (271-281, 371-381) an das mobile Endgerät mittels eines Bakensignals eines Superframes auf der ausgewählten Übertragungsressource überträgt, und wenn nein, ihren ersten Zähler nicht inkrementiert und keine Daten auf der Verbindung überträgt;
   das mobile Endgerät feststellt, ob ein Bakensignal auf der ausgewählten Übertragungsressource (252, 352) vorhanden ist, und wenn ja, seinen ersten Zähler inkrementiert (262, 362-1) und wenn nein, seinen ersten Zähler nicht inkrementiert und keine Daten auf der Verbindung empfängt;
   so dass die Basisstation und das mobile Endgerät dieselbe Übertragungsressource ($SC\text{-}Ch(t)$) zur Unterstützung der Verbindung auswählen.

2. System zur dynamischen Auswahl von Übertragungsressourcen nach Anspruch 1, **dadurch gekennzeichnet, dass** der erste Zähler der Basisstation inkrementiert wird (261, 361-1), wenn der Signalpegel auf der Übertragungsressource, der er zugeordnet ist, unterhalb eines vorbestimmten Schwellenwerts liegt, und ansonsten nicht inkrementiert wird.

3. System zur dynamischen Auswahl von Übertragungsressourcen nach Anspruch 2, **dadurch gekennzeichnet, dass** der Qualitätsindex einer Übertragungsressource im Bereich der Basisstation (bzw. des mobilen Endgeräts) als der Stand des ersten Zählers der Basisstation (bzw. des mobilen Endgeräts) geschätzt wird, der der Ressource zugeordnet ist.

4. System zur dynamischen Auswahl von Übertragungsressourcen nach Anspruch 2, **dadurch gekennzeichnet, dass** der Qualitätsindex einer Übertragungsressource im Bereich der Basisstation (bzw. des mobilen Endgeräts) anhand einer Prädiktionsfunktion (F) geschätzt wird, die als Prädiktionsvariable den Stand des ersten Zählers der Basisstation (bzw. des mobilen Endgeräts) hat, der der Ressource zugeordnet ist, wobei die Prädiktionsfunktion für die Basisstation und das mobile Endgerät identisch ist.

5. System zur dynamischen Auswahl von Übertragungsressourcen nach Anspruch 1, **dadurch gekennzeichnet, dass** die Basisstation und das Endgerät jeweils mindestens einen zweiten Zähler besitzen, der jeder der Übertragungsressourcen zugeordnet ist, wobei der Übertragungsqualitätsindex einer Übertragungsressource im Bereich der Basisstation (bzw. des mobilen Endgeräts) anhand einer Prädiktionsfunktion geschätzt wird, die als Prädiktionsvariablen die jeweiligen Stände des ersten und des zweiten Zählers der Basisstation (bzw. des mobilen Endgeräts) hat.

6. System zur dynamischen Auswahl von Übertragungsressourcen nach Anspruch 5, **dadurch gekennzeichnet, dass**

   dann, wenn die Basisstation feststellt, dass die ausgewählte Übertragungsressource nicht verfügbar ist, sie ihren dieser Ressource zugeordneten zweiten Zähler inkrementiert (361-2);
   dann, wenn das mobile Endgerät feststellt, dass das Bakensignal nicht auf der ausgewählten Übertragungsressource vorhanden ist (362-2), es seinen dieser Ressource zugeordneten zweiten Zähler inkrementiert.

7. System zur dynamischen Auswahl von Übertragungsressourcen nach Anspruch 6, **dadurch gekennzeichnet, dass** der Qualitätsindex einer Übertragungsressource von der Basisstation (bzw. dem mobilen Endgerät) als $\dfrac{C_1}{C_1 + C_2}$ berechnet wird, worin $C_1$ der Stand des ersten Zählers der Basisstation (bzw. des mobilen Endgeräts) ist und $C_2$ der Stand des zweiten Zählers der Basisstation (bzw. des mobilen Endgeräts) ist.

8. System zur dynamischen Auswahl von Übertragungsressourcen nach Anspruch 6, **dadurch gekennzeichnet, dass** der Qualitätsindex einer Übertragungsressource von der Basisstation (bzw. dem mobilen Endgerät) als

$$\frac{C_1}{C_1+C_2} + \alpha\sqrt{\frac{log_t}{C_1+C_2}}$$ berechnet wird, worin $C_1$ der Stand des ersten Zählers der Basisstation (bzw. des mobilen Endgeräts) ist und $C_2$ der Stand des zweiten Zählers der Basisstation (bzw. des mobilen Endgeräts) ist, $\alpha$ ein positiver Parameter ist und $t$ ein Zeitindex ist, der bei jedem Superframe inkrementiert wird.

9. System zur dynamischen Auswahl von Übertragungsressourcen nach Anspruch 1, **dadurch gekennzeichnet, dass** die Basisstation (bzw. das mobile Endgerät) dann, wenn sie bzw. es feststellt, dass die Fehlerrate auf der ausgewählten Übertragungsressource höher als ein vorbestimmter Schwellenwert ist, sie ihren zweiten Zähler, der dieser Ressource zugeordnet ist, inkrementiert.

10. System zur dynamischen Auswahl von Übertragungsressourcen nach Anspruch 9, **dadurch gekennzeichnet, dass** der Qualitätsindex einer Übertragungsressource von der Basisstation (bzw. dem mobilen Endgerät) als $\frac{C_1}{C_1+C'_2}$ berechnet wird, worin $C_1$ der Stand des ersten Zählers der Basisstation (bzw. des mobilen Endgeräts) ist und $C'_2$ der Stand des zweiten Zählers der Basisstation (bzw. des mobilen Endgeräts) ist.

**Claims**

1. System for dynamic selection of transmission resources between a base station, and particularly a base station of a small cell in a heterogeneous cellular network, and a mobile terminal, the base station being able to establish a link with the mobile terminal by accessing said transmission resources cognitively, **characterised in that**:

   each of the base station and the terminal have at least one counter associated with each of the transmission resources, the state of the first counter being characteristic of the availability of the transmission resource with which it is associated, the base station and the mobile terminal calculating (221-222, 321-322) a transmission quality index for each transmission resource starting from the state of the first counter and selecting (231-232, 331-332) the transmission resource with the highest index;
   the base station determining if the selected transmission resource is available (251, 351), and if it is, incrementing its first counter (261, 361-1) and then transmitting the state of this counter (271-281, 371-381) to the mobile terminal using a beacon signal of a superframe on the selected transmission resource, and if not, not incrementing its first counter and not transmitting data on said link;
   the mobile terminal determining if a beacon signal is present on the selected transmission resource (252, 352) and if it is, incrementing (262, 362-1) its first counter, and if it is not, not incrementing its first counter and not receiving data on said link;
   such that the base station and the mobile terminal select the same transmission resource ($SC$ - $Ch(t)$) to support the link.

2. System for dynamic selection of transmission resources according to claim 1, **characterised in that** the first counter of the base station is incremented (261, 361-1) if the signal level on the transmission resource with which it is associated is less than a predetermined threshold, and otherwise it is not incremented.

3. System for dynamic selection of transmission resources according to claim 2, **characterised in that** the quality index of a transmission resource is estimated at the base station (resp. at the mobile terminal) as the state of the first counter of the base station (resp. of the mobile terminal) associated with said resource.

4. System for dynamic selection of transmission resources according to claim 2, **characterised in that** the quality index of a transmission resource is estimated at the base station (resp. at the mobile terminal) from a prediction function ($F$) having the state of the first counter of the base station (resp. of the mobile terminal) associated with said resource as predictive variable, said prediction function being identical for the base station and for the mobile terminal.

5. System for dynamic selection of transmission resources according to claim 1, **characterised in that** each of the base station and the terminal has at least one second counter associated with each transmission resource, the transmission quality index of a transmission resource being estimated at the base station (resp. at the mobile terminal) from a prediction function having the states of the first and second counters respectively of the base station (resp. of the mobile terminal), as predictive variables.

6. System for dynamic selection of transmission resources according to claim 5, **characterised in that**:

   when the base station determines that the selected transmission resource is not available, it increments (361-2) its second counter associated with this resource;
   when the mobile terminal determines that the beacon signal is not present on the selected transmission resource (362-2), it increments its second counter associated with this resource;.

7. System for dynamic selection of transmission resources according to claim 6, **characterised in that** the quality index of a transmission resource is calculated by the base station (resp. by the mobile terminal) as $\dfrac{C_1}{C_1+C_2}$ in which $C_1$ is the state of the first counter of the base station (resp. of the mobile terminal) and $C_2$ is the state of the second counter of the base station (resp. of the mobile terminal).

8. System for dynamic selection of transmission resources according to claim 6, **characterised in that** the quality index of a transmission resource is calculated by the base station (resp. by the mobile terminal) as $\dfrac{C_1}{C_1+C_2}+\alpha\sqrt{\dfrac{\log t}{C_1+C_2}}$ in which $C_1$ is the state of the first counter of the base station (resp. of the mobile terminal) and $C_2$ is the state of the second counter of the base station (resp. of the mobile terminal), $\alpha$ is a positive parameter and $t$ is a temporal index incremented at each superframe.

9. System for dynamic selection of transmission resources according to claim 1, **characterised in that** when the base station (resp. the mobile terminal) determines that the error rate on the selected transmission resource is higher than a predetermined threshold value, it increments its second counter associated with this resource.

10. System for dynamic selection of transmission resources according to claim 9, **characterised in that** the quality index of a transmission resource is calculated by the base station (resp. by the mobile terminal) as $\dfrac{C_1}{C_1+C'_2}$ in which $C_1$ is the state of the first counter of the base station (resp. of the mobile terminal) and $C'_2$ is the state of the second counter of the base station (resp. of the mobile terminal).

FIG.1

MC

multi RAT SC

ULBSC

LBSC

$$t = 1$$
⌐211

$$\forall i \in B$$
$$Q_t(i) = F\left(SC\_counter(i)\right)$$
⌐221

$$SC - Ch(t) = \arg\max_{i \in B}\left(Q_t(i)\right)$$
⌐231

*listen on channel* $SC - Ch(t)$
⌐241

$SC - Ch(t)$ *free?*
⌐251

N

Y

$$SC\_counter(SC - Ch(t)) + +$$
⌐261

*include* $SC\_counter(SC - Ch(t))$ *in BP*
*include data in DTP*
⌐271

*send superframe over* $SC - Ch(t)$
⌐281

$$t = t + 1$$
⌐291

FIG.2A

$$t = 1 \qquad 212$$

$$\forall i \in B \qquad 222$$
$$Q_t(i) = F\big(T\_counter(i)\big)$$

$$SC - Ch(t) = \underset{i \in B}{\arg\max}\big(Q_t(i)\big) \qquad 232$$

*listen on channel $SC - Ch(t)$*    242
*wait for beacon on channel $SC - Ch(t)$*

*beacon received ?*    252

N

Y

*update $T\_counter(SC - Ch(t))$*    262

*receive data*    272

$$t = t + 1 \qquad 282$$

FIG.2B

$$t = 1$$ —311

$$\forall i \in B$$
$$Q_t(i) = F\left(SC\_counter_k(i); k = 1,2\right)$$ —321

$$SC - Ch(t) = \underset{i \in B}{\arg\max}\left(Q_t(i)\right)$$ —331

listen on channel $SC - Ch(t)$ —341

$SC - Ch(t)$ free? —351

N

361-2

$$SC\_counter_2(SC - Ch(t)) + +$$

Y

$$SC\_counter_1(SC - Ch(t)) + +$$ —361-1

include $SC\_counter_k(SC - Ch(t))$ in $BP$; $k = 1,2$ —371
include data in $DTP$

send superframe over $SC - Ch(t)$ —381

$$t = t + 1$$ —391

FIG.3A

$t = 1$ — 312

$$\forall i \in B$$
$$Q_t(i) = F\left(T\_counter_i^k(t); k = 1, 2\right)$$
322

$$SC - Ch(t) = \underset{i \in B}{\arg\max}\left(Q_t(i)\right)$$
332

listen on channel $SC - Ch(t)$
wait for beacon on channel $SC - Ch(t)$
342

beacon received ? — 352

N

Y

362-2

$T\_counter_2(SC - Ch(t)) + +$

362-1

$T\_counter_1(SC - Ch(t)) + +$

receive data — 372

$t = t + 1$ — 382

FIG.3B

## RÉFÉRENCES CITÉES DANS LA DESCRIPTION

**Documents brevets cités dans la description**

- EP 3089516 A

**Littérature non-brevet citée dans la description**

- **A. DE DOMENICO et al.** A Survey on MAC Stratégies for Cognitive Radio Networks. *IEEE Communications Surveys & Tutorials,* 2012, vol. 14 (1), 21-44

- **P. AUER et al.** Finite-time analysis of the multiarmed bandit problem. Machine Learning, 2002, vol. 47, 235-256